# EUROPÄISCHE PATENTSCHRIFT

(11) **EP 3 811 753 B1**
(45) Veröffentlichungstag und Bekanntmachung des Hinweises auf die Patenterteilung: **25.05.2022**
(21) Anmeldenummer: 20401053.2
(22) Anmeldetag: 19.10.2020
(51) Int. Cl.: A01C 17/00, A01C 21/00

(54) **VERFAHREN ZUM ÜBERPRÜFEN DES BETRIEBS EINES MESSSYSTEMS EINER LANDWIRTSCHAFTLICHEN STREUMASCHINE**
METHOD FOR CHECKING THE OPERATION OF A MEASURING SYSTEM OF AN AGRICULTURAL SPREADER
PROCÉDÉ DE VÉRIFICATION DU FONCTIONNEMENT D'UN SYSTÈME DE MESURE D'UNE MACHINE D'ÉPANDAGE AGRICOLE

(30) Priorität: 25.10.2019 DE 102019128806
(43) Veröffentlichungstag der Anmeldung: 28.04.2021
(73) Patentinhaber: Amazonen-Werke H. Dreyer SE & Co. KG, 49205 Hasbergen (DE)
(72) Erfinder: Rahe, Florian, 49504 Lotte (DE); Ströbel-Fröschle, Markus, 49124 Georgsmarienhütte (DE)

(56) Entgegenhaltungen:
- EP-A1- 3 711 468
- EP-B1- 2 080 430
- DE-A1-102014 103 965

## Beschreibung

Die Erfindung betrifft ein Verfahren zum Überprüfen des Betriebs eines Messsystems einer landwirtschaftlichen Streumaschine nach dem Oberbegriff des Patentanspruchs 1 und eine landwirtschaftliche Streumaschine nach dem Oberbegriff des Patentanspruchs 10.

Der ordnungsgemäße Betrieb moderner Streugeräte, wie beispielsweise Düngerstreuer, wird häufig mittels mehrerer unterschiedlicher Messsysteme überwacht. Ferner werden die Messwerte entsprechender Messsysteme zum Steuern und/oder Regeln der Streugeräte verwendet.

Dabei ist es bekannt, während des Betriebs eine winkelabhängige Mengenverteilung des Streuguts nach dessen Abwurf von einer Streuscheibe der landwirtschaftlichen Streumaschine mittels eines Messsystems zu erfassen. Aus der erfassten winkelabhängigen Mengenverteilung des Streuguts kann dann ein mengenbasierter Abwurfwinkel ermittelt werden.

Aufgrund unterschiedlicher Ursachen, wie etwa einem Defekt oder einer Verschmutzung, können die von dem Messsystem bereitgestellten Werte jedoch fehlerhaft oder ungenau sein. Fehlerhafte oder ungenaue Messwerte können zu einer Beeinträchtigung von Gerätefunktionen und/oder zu einer unbeabsichtigten Streugutverteilung führen.

Aus der Druckschrift EP 2 080 430 B1 ist beispielsweise bekannt, dass zur Einstellung eines Streubilds Informationen über den Abwurfwinkel und die Abwurfgeschwindigkeit erforderlich sein können. Es wird vorgeschlagen, den Abwurfwinkel und die Abwurfgeschwindigkeit auf Grundlage einer einzigen Messung zu ermitteln.

Eine gattungsgemäße landwirtschaftliche Streumaschine und ein gattungsgemäßes Verfahren zum Überprüfen des Betriebs eines Messsystems ist aus der DE 10 2014 103 965 A1 bekannt.

Bei dieser und anderen Lösungen zur Einstellung eines gewünschten Streubilds erfolgt bisher jedoch keine zuverlässige Verifikation der zur Streubildeinstellung verwendeten Messwerte. Fehlerhafte oder ungenaue Messwerte führen somit häufig zu der Einstellung ungeeigneter Streubilder, ohne dass der Maschinenbediener Kenntnis über die Fehleinstellung erlangt.

Damit fehlerhafte oder ungenaue Messwerte identifiziert werden können, ist folglich eine zuverlässige Verifikation der Messwerte erforderlich.

Die der Erfindung zugrundeliegende Aufgabe besteht somit darin, eine zuverlässige Überprüfung des Betriebs eines Messsystems einer landwirtschaftlichen Streumaschine zu ermöglichen, mittels welchem ein aktueller Abwurfwinkel während der Ausbringung von Streugut ermittelbar ist.

Die Aufgabe wird gelöst durch ein Verfahren der eingangs genannten Art, wobei im Rahmen des erfindungsgemäßen Verfahrens eine winkelabhängige Geschwindigkeitsverteilung des Streuguts nach dessen Abwurf von der Streuscheibe der landwirtschaftlichen Streumaschine mittels des Messsystems der landwirtschaftlichen Streumaschine erfasst wird. Auf Grundlage der erfassten winkelabhängigen Mengenverteilung des Streuguts und der erfassten winkelabhängigen Geschwindigkeitsverteilung des Streuguts wird dann eine Verifikation der Messwerte des Messsystems durchgeführt.

Die Erfindung macht sich die Erkenntnis zunutze, dass die winkelabhängige Geschwindigkeitsverteilung des Streuguts nach dessen Abwurf von der Streuscheibe auch dann noch zuverlässig ermittelt werden kann, wenn das Messsystem oder dessen Sensor bzw. dessen Sensoren verschmutzt sind. Da die Verschmutzung des Messsystems jedoch einen Einfluss auf die Erfassung der winkelabhängigen Mengenverteilung des Streuguts haben kann, kann eine Verifikation der Messwerte des Messsystems durch einen Vergleich der erfassten winkelabhängigen Mengenverteilung des Streuguts und der erfassten winkelabhängigen Geschwindigkeitsverteilung des Streuguts und/oder daraus abgeleiteter Werte umgesetzt werden. Wenn die Verifikation der Messwerte des Messsystems scheitert, arbeitet das Messsystem nicht ordnungsgemäß. Beispielsweise kann ein oder können mehrere Sensoren eines eingesetzten Messsystems defekt oder verschmutzt sein. Ein fehlerhafter oder beeinträchtigter Betrieb des eingesetzten Messsystems, beispielsweise aufgrund einer Verschmutzung des Messsystems, kann somit zuverlässig erkannt werden. Hierdurch können fehlerhafte oder ungenaue Messwerte identifiziert werden, sodass eine Fehlsteuerung und/oder Fehlregelung der Streumaschine frühzeitig durch den Maschinenbediener erkannt und/oder korrigiert werden kann.

Das Durchführen der Verifikation der Messwerte des Messsystems auf Grundlage der erfassten winkelabhängigen Mengenverteilung des Streuguts und der erfassten winkelabhängigen Geschwindigkeitsverteilung des Streuguts erfolgt vorzugsweise mittels einer Auswerteeinrichtung der landwirtschaftlichen Streumaschine. Die Auswerteeinrichtung umfasst vorzugsweise eine elektronische Datenverarbeitungseinrichtung.

In einer anderen Ausführungsform des erfindungsgemäßen Verfahrens wird aus der erfassten winkelabhängigen Mengenverteilung des Streuguts ein mengenbasierter Abwurfwinkel ermittelt. Alternativ oder zusätzlich wird aus der erfassten winkelabhängigen Geschwindigkeitsverteilung des Streuguts ein geschwindigkeitsbasierter Abwurfwinkel ermittelt. Das Ermitteln des mengenbasierten Abwurfwinkels aus der erfassten winkelabhängigen Mengenverteilung des Streuguts und/oder das Ermitteln des geschwindigkeitsbasierten Abwurfwinkels aus der winkelabhängigen Geschwindigkeitsverteilung des Streuguts erfolgt vorzugsweise mittels der Auswerteeinrichtung der landwirtschaftlichen Streumaschine.

In einer bevorzugten Ausführungsform des erfindungsgemäßen Verfahrens umfasst das Durchführen der Verifikation der Messwerte des Messsystems auf Grundlage der erfassten winkelabhängigen Mengenverteilung des Streuguts und der erfassten winkelabhängigen Geschwindigkeitsverteilung des Streuguts ein Vergleichen des mengenbasierten Abwurfwinkels und des geschwindigkeitsbasierten Abwurfwinkels. Der aktuelle Abwurfwinkel kann während der Ausbringung von Streugut sowohl aus einer erfassten winkelabhängigen Mengenverteilung des Streuguts als auch aus einer erfassten winkelabhängigen Geschwindigkeitsverteilung des Streuguts ermittelt werden. Somit wird der Abwurfwinkel auf Grundlage von unterschiedlichen Messwerten ermittelt, wodurch eine zuverlässige Verifikation der Messwerte des Messsystems durch einen Vergleich der ermittelten Abwurfwinkelwerte erfolgen kann.

Die winkelabhängige Geschwindigkeitsverteilung des Streuguts definiert ein winkelbezogenes Geschwindigkeitsprofil des Streuguts, welches an den Abwurfwinkel gekoppelt ist. Das winkelbezogene Geschwindigkeitsprofil kann mit dem Abwurfwinkel mitwandern bzw. verschoben werden. Das Vergleichen des mengenbasierten Abwurfwinkels und des geschwindigkeitsbasierten Abwurfwinkels im Rahmen der Verifikation der Messwerte des Messsystems erfolgt vorzugsweise mittels der Auswerteeinrichtung der landwirtschaftlichen Streumaschine. Wenn der mengenbasierte Abwurfwinkel und der geschwindigkeitsbasierte Abwurfwinkel über ein Toleranzmaß hinaus voneinander abweichen, liegt die Abweichung zwischen den ermittelten Abwurfwinkeln außerhalb eines akzeptablen Toleranzbereichs, sodass hieraus abgeleitet werden kann, dass das Messsystem nicht ordnungsgemäß arbeitet. Der Toleranzbereich kann ein statischer oder ein dynamischer und variabler Bereich sein. Beispielsweise ist der Toleranzbereich abhängig von einem oder mehreren Betriebsparametern der Streumaschine, wie etwa der Drehzahl der Streuscheiben der Streumaschine. Alternativ oder zusätzlich kann der Toleranzbereich von einem oder mehreren Berechnungsparametern abhängig sein, wie etwa einem aus der erfassten winkelabhängigen Mengenverteilung des Streuguts und/oder der erfassten winkelabhängigen Geschwindigkeitsverteilung des Streuguts abgeleiteten Berechnungsparameter. Beispielsweise kann ein Sensor oder können mehrere Sensoren eines eingesetzten Messsystems defekt oder verschmutzt sein. Das erfindungsgemäße Verfahren erlaubt die frühzeitige Erkennung entsprechender Defekte und/oder Verschmutzungen, sodass entsprechende Gegenmaßnahmen zur Aufrechterhaltung der Messqualität eingeleitet werden können.

Die Streumaschine ist vorzugsweise ein Zweischeiben-Zentrifugaldüngerstreuer und umfasst zwei nebeneinander angeordnete rotierend angetriebene Streuscheiben. Die winkelabhängige Mengenverteilung des Streuguts und die winkelabhängige Geschwindigkeitsverteilung des Streuguts kann entsprechend an beiden Streuscheiben erfasst werden, sodass entsprechende mengenbasierte Abwurfwinkel und geschwindigkeitsbasierte Abwurfwinkel im Rahmen der Messwertverifikation miteinander verglichen werden können. Das Streugut kann beispielsweise Dünger sein.

In einer bevorzugten Ausführungsform des erfindungsgemäßen Verfahrens erfolgt das Erfassen der winkelabhängigen Mengenverteilung des Streuguts und das Erfassen der winkelabhängigen Geschwindigkeitsverteilung des Streuguts mittels des gleichen oder desselben Sensors oder der gleichen oder derselben Sensoren. Das Messsystem der Streumaschine weist vorzugsweise mehrere Sensoren auf, welche um die Streuscheibe herum angeordnet sind. Die Sensoren sind vorzugsweise konzentrisch zur Streuscheibe angeordnet. Die Sensoren können dabei beispielsweise Radarsensoren sein. Das Ermitteln des geschwindigkeitsbasierten Abwurfwinkels erfolgt vorzugsweise auf Grundlage von Abwurfgeschwindigkeitsmesswerten, welche aus den Frequenzspektren der Sensoren ermittelt werden. Das winkelbezogene Geschwindigkeitsprofil wird also aus Frequenzspektren der Messsignale des Messsystems ermittelt.

Es ist darüber hinaus ein erfindungsgemäßes Verfahren vorteilhaft, bei welchem das Erfassen der winkelabhängigen Mengenverteilung des Streuguts und/oder das Erfassen der winkelabhängigen Geschwindigkeitsverteilung des Streuguts mittels eines oder mehrerer Sensoren des Messsystems erfolgt, welche im Nahbereich der Streuscheibe der landwirtschaftlichen Streumaschine angeordnet sind. Der eine oder die mehreren Sensoren sind dabei vorzugsweise maximal 1,5 m vom Mittelpunkt der Streuscheibe entfernt angeordnet. Alternativ oder zusätzlich erfolgt das Erfassen der winkelabhängigen Mengenverteilung des Streuguts und/oder der winkelabhängigen Geschwindigkeitsverteilung des Streuguts in einem Messbereich, welcher maximal 1,5 m vom Mittelpunkt der Streuscheibe entfernt ist.

In einer weiteren Ausführungsform des erfindungsgemäßen Verfahrens erfolgt das Erfassen der winkelabhängigen Mengenverteilung des Streuguts auf Grundlage einer winkelabhängigen Amplitudenverteilung der Messsignale des Messsystems. Vorzugsweise erfolgt das Erfassen der winkelabhängigen Mengenverteilung des Streuguts auf Grundlage einer von dem einen oder den mehreren Sensoren erfassten Intensitätsverteilung des Rückstreusignals.

Es ist darüber hinaus ein erfindungsgemäßes Verfahren vorteilhaft, bei welchem das Erfassen der winkelabhängigen Geschwindigkeitsverteilung des Streuguts auf Grundlage von winkelabhängigen Frequenzänderungen zwischen gesendeten und reflektierten Signalen des Messsystems erfolgt. Das Erfassen der winkelabhängigen Geschwindigkeitsverteilung des Streuguts erfolgt somit auf Grundlage der Frequenzverschiebung bzw. der Dopplerverschiebung.

In einer Weiterbildung des erfindungsgemäßen Verfahrens wird beim Ermitteln des geschwindigkeitsbasierten Abwurfwinkels aus der erfassten winkelabhängigen Geschwindigkeitsverteilung des Streuguts ein Zusammenhang zwischen der Geschwindigkeit des Streuguts einerseits und einer Verweildauer des Streuguts auf der Streuscheibe andererseits berücksichtigt. Alternativ oder zusätzlich wird beim Ermitteln des geschwindigkeitsbasierten Abwurfwinkels aus der erfassten winkelabhängigen Geschwindigkeitsverteilung des Streuguts ein Zusammenhang zwischen der Verweildauer des Streuguts auf der Streuscheibe, einem eingestellten Aufgabepunkt des Streuguts auf die Streuscheibe und einer Drehzahl der Streuscheibe einerseits und dem Abwurfwinkel andererseits berücksichtigt. Vorzugsweise wird beim Ermitteln des geschwindigkeitsbasierten Abwurfwinkels aus der erfassten winkelabhängigen Geschwindigkeitsverteilung des Streuguts auch die verwendete Streuscheibe, insbesondere deren Typ, Aufbau und/oder Geometrie, berücksichtigt. Das Verfahren kann folglich auch das Erfassen der aktuell verwendeten Streuscheibe umfassen. Dies kann beispielsweise auf Grundlage einer entsprechenden Eingabe eines Maschinenbedieners oder durch eine selbsttätige Streuscheibenidentifikation durch die Streumaschine erfolgen. Die selbsttätige Streuscheibenidentifikation kann beispielsweise durch das Auslesen eines Codes, beispielsweise eines RFID-Codes, an der verwendeten Streuscheibe und/oder über einen auf Streuscheibendaten basierenden Algorithmus erfolgen.

Es ist ferner ein erfindungsgemäßes Verfahren bevorzugt, bei welchem eine Warnmeldung durch die landwirtschaftliche Streumaschine ausgegeben wird, wenn die Verifikation der Messwerte des Messsystems scheitert und/oder die Abweichung zwischen dem mengenbasierten Abwurfwinkel und dem geschwindigkeitsbasierten Abwurfwinkel außerhalb eines Toleranzbereichs liegt. Ferner kann eine den mengenbasierten Abwurfwinkel, den geschwindigkeitsbasierten Abwurfwinkel und/oder einen aus dem mengenbasierten Abwurfwinkel und dem geschwindigkeitsbasierten Abwurfwinkel berechneten Abwurfwinkelwert berücksichtigende Regelung des Aufgabepunkts des Streuguts auf die Streuscheibe unterbrochen oder angepasst werden, wenn die Verifikation der Messwerte des Messsystems scheitert und/oder die Abweichung zwischen dem mengenbasierten Abwurfwinkel und dem geschwindigkeitsbasierten Abwurfwinkel außerhalb eines Toleranzbereichs liegt. Die Berechnung des Abwurfwinkelwertes aus dem mengenbasierten Abwurfwinkel und dem geschwindigkeitsbasierten Abwurfwinkel kann beispielsweise durch eine Mittelwertbildung oder eine gewichtete Verrechnung des mengenbasierten Abwurfwinkels und des geschwindigkeitsbasierten Abwurfwinkels erfolgen. Durch das Ausgeben der Warnmeldung wird der Maschinenbediener über die fehlgeschlagene Messwertverifikation informiert, sodass dieser entsprechende Maßnahmen einleiten kann. Beispielsweise kann dieser dann die Reinigung der Sensoren eines Messsystems der Streumaschine vornehmen oder ein Sensorreinigungssystem der Streumaschine aktivieren. Alternativ wird der fehlerhaft arbeitende Sensor bei einer Regelung des Aufgabepunkts des Streuguts auf die Streuscheibe nicht länger berücksichtigt. Durch das Unterbrechen oder Anpassen der Regelung des Aufgabepunkts des Streuguts auf die Streuscheibe wird die Fehlausbringung aufgrund fehlerhafter oder ungenauer Messwerte vermieden. Alternativ oder zusätzlich kann durch die landwirtschaftliche Streumaschine ein Hinweis ausgegeben werden, dass ein Säubern der Sensoren erforderlich ist, wenn die Verifikation der Messwerte des Messsystems scheitert und/oder die Abweichung zwischen dem mengenbasierten Abwurfwinkel und dem geschwindigkeitsbasierten Abwurfwinkel außerhalb des Toleranzbereichs liegt. Darüber hinaus kann durch die landwirtschaftliche Streumaschine ein Hinweis ausgegeben werden, dass ein Streuversuch durchzuführen ist, wenn die Verifikation der Messwerte des Messsystems scheitert und/oder die Abweichung zwischen dem mengenbasierten Abwurfwinkel und dem geschwindigkeitsbasierten Abwurfwinkel außerhalb eines Toleranzbereichs liegt. Durch den Streuversuch kann beispielsweise festgestellt werden, ob das Messsystem beschädigt ist. Der Toleranzbereich kann ein statischer oder ein dynamischer und variabler Bereich sein. Beispielsweise ist der Toleranzbereich abhängig von einem oder mehreren Betriebsparametern der Streumaschine, wie etwa der Drehzahl der Streuscheiben der Streumaschine. Alternativ oder zusätzlich kann der Toleranzbereich von einem oder mehreren Berechnungsparametern abhängig sein, wie etwa einem aus der erfassten winkelabhängigen Mengenverteilung des Streuguts und/oder der erfassten winkelabhängigen Geschwindigkeitsverteilung des Streuguts abgeleiteten Berechnungsparameter.

Die der Erfindung zugrundeliegende Aufgabe wird ferner durch eine landwirtschaftliche Streumaschine der eingangs genannten Art gelöst, wobei das Messsystem der erfindungsgemäßen landwirtschaftlichen Streumaschine dazu eingerichtet ist, eine winkelabhängige Geschwindigkeitsverteilung des Streuguts nach dessen Abwurf von der Streuscheibe zu erfassen. Die Auswerteeinrichtung der erfindungsgemäßen landwirtschaftlichen Streumaschine ist dazu eingerichtet, eine Verifikation der Messwerte des Messsystems auf Grundlage der erfassten winkelabhängigen Mengenverteilung des Streuguts und der erfassten winkelabhängigen Geschwindigkeitsverteilung des Streuguts durchzuführen.

Die erfindungsgemäße landwirtschaftliche Streumaschine wird ferner dadurch vorteilhaft weitergebildet, dass die Auswerteeinrichtung dazu eingerichtet ist, einen mengenbasierten Abwurfwinkel aus der erfassten winkelabhängigen Mengenverteilung des Streuguts und/oder einen geschwindigkeitsbasierten Abwurfwinkel aus der erfassten winkelabhängigen Geschwindigkeitsverteilung des Streuguts zu ermitteln. Vorzugsweise ist die Auswerteeinrichtung dazu eingerichtet, den mengenbasierten Abwurfwinkel und den geschwindigkeitsbasierten Abwurfwinkel im Rahmen der Verifikation der Messwerte des Messsystems miteinander zu vergleichen.

Die erfindungsgemäße landwirtschaftliche Streumaschine wird ferner dadurch vorteilhaft weitergebildet, dass das Messsystem mehrere Sensoren, insbesondere Radarsensoren, aufweist, welche um die Streuscheibe herum angeordnet sind. Vorzugsweise sind die Sensoren im Nahbereich der Streuscheibe angeordnet. Insbesondere sind die Sensoren konzentrisch zur Streuscheibe angeordnet.

In einer weiteren bevorzugten Ausführungsform ist die erfindungsgemäße landwirtschaftliche Streumaschine dazu eingerichtet, das Verfahren zum Überprüfen des Betriebs eines Messsystems einer landwirtschaftlichen Streumaschine nach einer der vorstehend beschriebenen Ausführungsformen auszuführen. Hinsichtlich der Vorteile und Modifikationen der erfindungsgemäßen landwirtschaftlichen Streumaschine wird somit auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: eine Streuscheibe und ein Messsystem einer erfindungsgemäßen landwirtschaftlichen Streumaschine in einer schematischen Draufsicht;
- Fig. 2: die in der Fig. 1 dargestellte Streuscheibe samt Messsystem in einer schematischen Seitenansicht;
- Fig. 3: eine im Rahmen des erfindungsgemäßen Verfahrens erfasste winkelabhängige Amplitudenverteilung der Messsignale eines Messsystems sowie die daraus ermittelte winkelabhängige Mengenverteilung des Streuguts;
- Fig. 4: im Rahmen des erfindungsgemäßen Verfahrens erfasste winkelabhängige Frequenzänderungen zwischen gesendeten und reflektierten Signalen eines Messsystems sowie die daraus ermittelte winkelabhängige Geschwindigkeitsverteilung des Streuguts;
- Fig. 5: eine im Rahmen des erfindungsgemäßen Verfahrens erfasste winkelabhängige Amplitudenverteilung der Messsignale eines Messsystems sowie die daraus ermittelte winkelabhängige Mengenverteilung des Streuguts; und
- Fig. 6: im Rahmen des erfindungsgemäßen Verfahrens erfasste winkelabhängige Frequenzänderungen zwischen gesendeten und reflektierten Signalen eines Messsystems sowie die daraus ermittelte winkelabhängige Geschwindigkeitsverteilung des Streuguts.

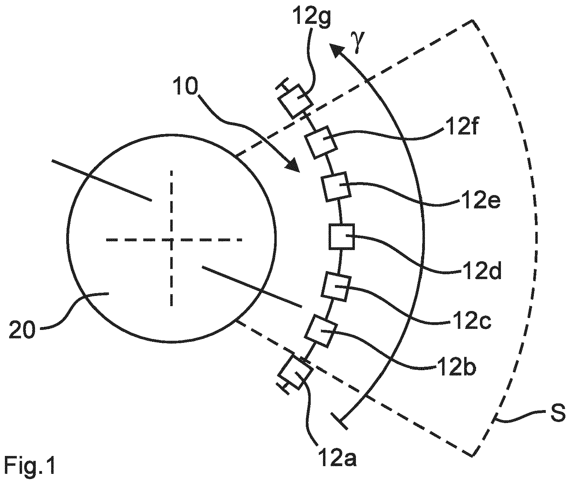

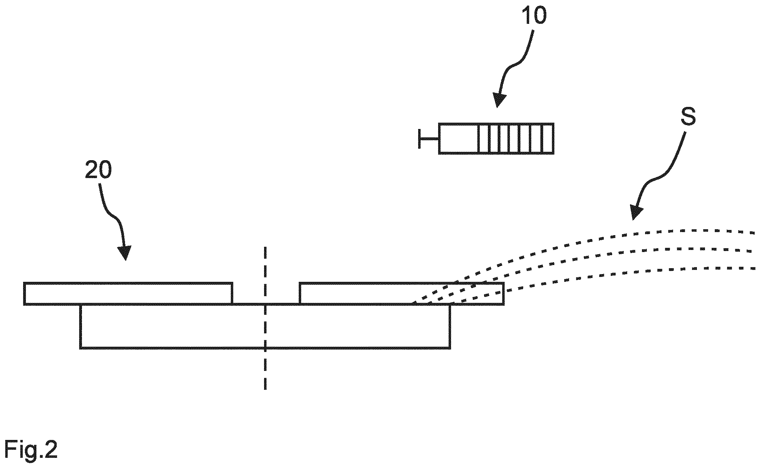

Die Fig. 1 und 2 zeigen eine rotierend antreibbare Streuscheibe 20 einer als Düngerstreuer ausgebildeten landwirtschaftlichen Streumaschine. Ferner weist die landwirtschaftliche Streumaschine ein Messsystem 10 mit mehreren Sensoren 12a-12g auf. Die Sensoren 12a-12g sind als Radarsensoren ausgebildet und entlang eines Bahnabschnitts um die Streuscheibe 20 herum angeordnet. Die Sensoren 12a-12g sind konzentrisch zur Streuscheibe 20 angeordnet und befinden sich im Nahbereich der Streuscheibe 20.

Das Messsystem 10 ist dazu eingerichtet, eine winkelabhängige Mengenverteilung 22 des Streuguts S nach dessen Abwurf von der Streuscheibe 20 zu erfassen. Darüber hinaus ist das Messsystem 10 dazu eingerichtet, eine winkelabhängige Geschwindigkeitsverteilung 24 des Streuguts S nach dessen Abwurf von der Streuscheibe 20 zu erfassen.

Eine nicht dargestellte Auswerteeinrichtung der landwirtschaftlichen Streumaschine ermittelt aus der erfassten winkelabhängigen Mengenverteilung 22 des Streuguts S einen mengenbasierten Abwurfwinkel. Die Auswerteeinrichtung ermittelt ferner aus der erfassten winkelabhängigen Geschwindigkeitsverteilung 24 des Streuguts S einen geschwindigkeitsbasierten Abwurfwinkel. Im Rahmen einer Messwertverifikation vergleicht die Auswerteeinrichtung dann den mengenbasierten Abwurfwinkel und den geschwindigkeitsbasierten Abwurfwinkel miteinander. Auf diese Weise können Sensordefekte und Sensorverschmutzungen an den Sensoren 12a-12g erkannt werden, welche zu einer Beeinträchtigung von Gerätefunktionen und zu einer unbeabsichtigten Streugutverteilung auf der landwirtschaftlichen Nutzfläche führen können.

Wenn eine außerhalb eines Toleranzbereichs liegende Abweichung zwischen dem mengenbasierten Abwurfwinkel und dem geschwindigkeitsbasierten Abwurfwinkel von der Auswerteeinrichtung festgestellt wird, wird durch die landwirtschaftliche Streumaschine eine Warnmeldung ausgegeben und der Maschinenbediener wird darauf hingewiesen, dass ein Säubern der Sensoren 12a-12g oder eine Reparatur bestimmter Sensoren 12a-12g erforderlich ist. Ferner kann die landwirtschaftliche Streumaschine beim Feststellen einer außerhalb des Toleranzbereichs liegenden Abweichung zwischen dem mengenbasierten Abwurfwinkel und dem geschwindigkeitsbasierten Abwurfwinkel eine Aufgabepunktregelung des Streuguts S auf die Streuscheibe 20 unterbrechen. Da die Aufgabepunktregelung den Abwurfwinkel in der Regelungsroutine berücksichtigt, ist eine Unterbrechung der Aufgabepunktregelung erforderlich, um eine Fehlausbringung des Streuguts S auf der landwirtschaftlichen Nutzfläche zu vermeiden.

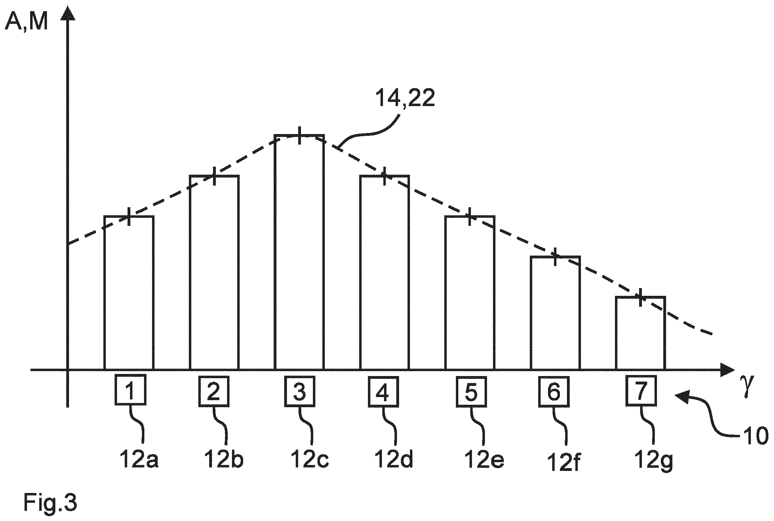

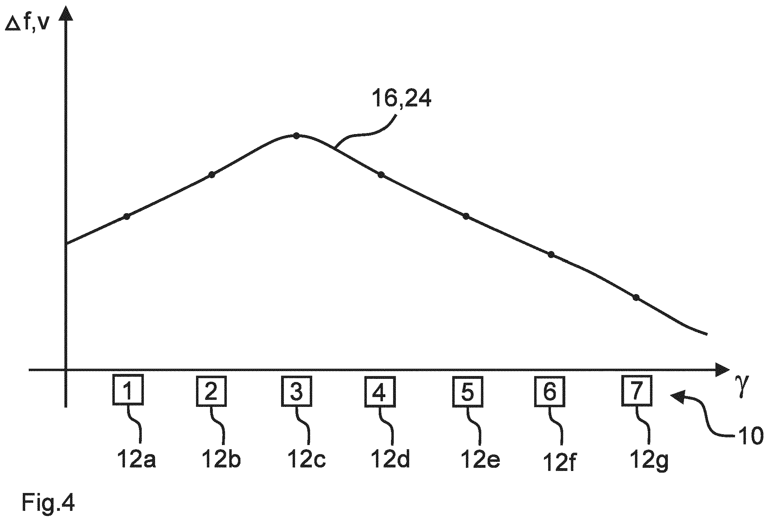

Die Fig. 3 und 4 zeigen Messwerte, welche von einem Messsystem 10 einer landwirtschaftlichen Streumaschine während der Ausbringung von Streugut S auf eine landwirtschaftliche Nutzfläche aufgezeichnet wurden. Das Messsystem 10 umfasst die Sensoren 12a-12g.

In der Fig. 3 sind die Messsignalamplitude A und die korrespondierende Streugutmenge M über den Winkel γ aufgetragen. Die Figur zeigt eine winkelabhängige Amplitudenverteilung 14 der Messsignale des Messsystems 10. Auf Grundlage der Amplitudenverteilung 14 der Messsignale des Messsystems 10 kann eine Auswerteeinrichtung der landwirtschaftlichen Streumaschine dann eine winkelabhängige Mengenverteilung 22 des Streuguts S ermitteln. Die winkelabhängige Mengenverteilung 22 des Streuguts S ist in diesem Fall proportional zu der winkelabhängigen Amplitudenverteilung 14 der Messsignale des Messsystems 10.

In der Fig. 4 sind beispielhaft die Frequenzänderung Δf und die Streugutgeschwindigkeit v über den Winkel γ aufgetragen. Die Figur zeigt winkelabhängige Frequenzänderungen 16 zwischen gesendeten und reflektierten Signalen des Messsystems 10. Auf Grundlage der winkelabhängigen Frequenzänderungen 16 zwischen gesendeten und reflektierten Signalen des Messsystems 10 kann die Auswerteeinrichtung der landwirtschaftlichen Streumaschine dann eine winkelabhängige Geschwindigkeitsverteilung 24 des Streuguts S ermitteln. Die winkelabhängige Geschwindigkeitsverteilung 24 des Streuguts S ist in diesem Fall proportional zu den winkelabhängigen Frequenzänderungen 16 zwischen den gesendeten und den reflektierten Signalen des Messsystems 10.

Zur Messwertverifikation wird nun ein mengenbasierter Abwurfwinkel, welcher auf Grundlage der winkelabhängigen Mengenverteilung 22 des Streuguts S ermittelt wird, mit einem geschwindigkeitsbasierten Abwurfwinkel, welcher auf Grundlage der winkelabhängigen Geschwindigkeitsverteilung 24 des Streuguts S ermittelt wird, verglichen. Da der auf Grundlage der winkelabhängigen Mengenverteilung 22 des Streuguts S ermittelte mengenbasierte Abwurfwinkel in diesem Fall im Wesentlichen dem auf Grundlage der winkelabhängigen Geschwindigkeitsverteilung 24 des Streuguts S ermittelten geschwindigkeitsbasierten Abwurfwinkel entspricht, ist davon auszugehen, dass sämtliche Sensoren 12a-12g einwandfrei arbeiten und nicht verschmutzt sind.

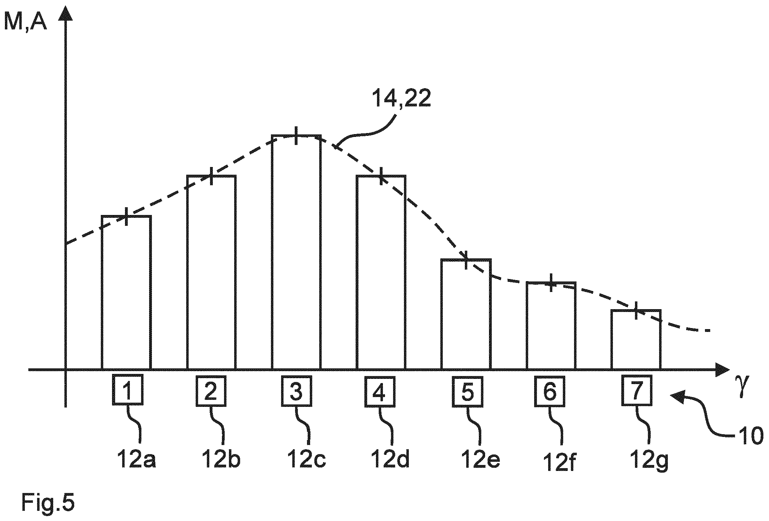

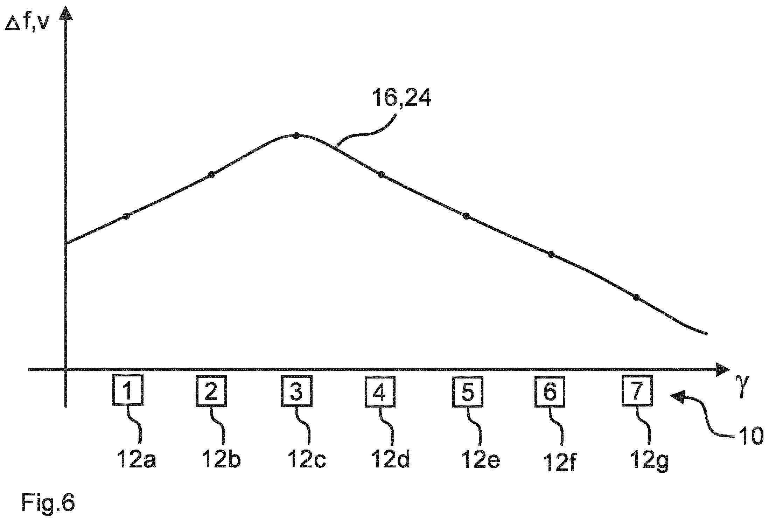

Die Fig. 5 und 6 zeigen ebenfalls während einer Ausbringung von Streugut S auf eine landwirtschaftliche Nutzfläche aufgezeichnete Messwerte eines Messsystems 10 einer landwirtschaftlichen Streumaschine, wobei während der Messwertaufzeichnung die Sensoren 12e & 12f des Messsystems 10 verschmutzt sind.

Die Fig. 5 zeigt eine winkelabhängige Amplitudenverteilung 14 der Messsignale des Messsystems 10 und eine daraus ermittelte winkelabhängige Mengenverteilung 22 des Streuguts S, welche proportional zu der winkelabhängigen Amplitudenverteilung 14 ist.

Die Fig. 6 zeigt winkelabhängige Frequenzänderungen 16 zwischen gesendeten und reflektierten Signalen des Messsystems 10 und eine daraus ermittelte winkelabhängige Geschwindigkeitsverteilung 24 des Streuguts S, welche proportional zu den winkelabhängigen Frequenzänderungen 16 ist.

Zur Messwertverifikation wird nun ein mengenbasierter Abwurfwinkel, welcher auf Grundlage der winkelabhängigen Mengenverteilung 22 des Streuguts S ermittelt wird, mit einem geschwindigkeitsbasierten Abwurfwinkel, welcher auf Grundlage der winkelabhängigen Geschwindigkeitsverteilung 24 des Streuguts S ermittelt wird, verglichen. Da der auf Grundlage der winkelabhängigen Mengenverteilung 22 des Streuguts S ermittelte mengenbasierte Abwurfwinkel in diesem Fall aufgrund der Messwerte der Sensoren 12e, 12e erheblich vom dem auf Grundlage der winkelabhängigen Geschwindigkeitsverteilung 24 des Streuguts S ermittelten geschwindigkeitsbasierten Abwurfwinkel abweicht, ist davon auszugehen, dass einer oder mehrere der Sensoren 12a-12g defekt und/oder verschmutzt sind.

### Bezugszeichenliste

- 10: Messsystem
- 12a-12g: Sensoren
- 14: Amplitudenverteilung
- 16: Frequenzänderungen
- 20: Streuscheibe
- 22: Mengenverteilung
- 24: Geschwindigkeitsverteilung

- A: Messsignalamplitude
- M: Streugutmenge
- v: Streugutgeschwindigkeit
- S: Streugut
- Δf: Frequenzänderung
- γ: Winkel

## Patentansprüche

1. Verfahren zum Überprüfen des Betriebs eines Messsystems (10) einer landwirtschaftlichen Streumaschine, mittels welchem ein aktueller Abwurfwinkel während der Ausbringung von Streugut (S) ermittelbar ist, mit dem Schritt:
- Erfassen einer winkelabhängigen Mengenverteilung (22) des Streuguts (S) nach dessen Abwurf von einer Streuscheibe (20) der landwirtschaftlichen Streumaschine mittels des Messsystems (10) der landwirtschaftlichen Streumaschine;
**gekennzeichnet durch** die Schritte:
- Erfassen einer winkelabhängigen Geschwindigkeitsverteilung (24) des Streuguts (S) nach dessen Abwurf von der Streuscheibe (20) der landwirtschaftlichen Streumaschine mittels des Messsystems (10) der landwirtschaftlichen Streumaschine; und
- Durchführen einer Verifikation der Messwerte des Messsystems (10) auf Grundlage der erfassten winkelabhängigen Mengenverteilung (22) des Streuguts (S) und der erfassten winkelabhängigen Geschwindigkeitsverteilung (24) des Streuguts (S).

2. Verfahren nach Anspruch 1,
**gekennzeichnet durch** zumindest einen der folgenden Schritte:
- Ermitteln eines mengenbasierten Abwurfwinkels aus der erfassten winkelabhängigen Mengenverteilung (22) des Streuguts (S); und
- Ermitteln eines geschwindigkeitsbasierten Abwurfwinkels aus der erfassten winkelabhängigen Geschwindigkeitsverteilung (24) des Streuguts (S).

3. Verfahren nach Anspruch 2,
**dadurch gekennzeichnet, dass** Durchführen der Verifikation der Messwerte des Messsystems (10) auf Grundlage der erfassten winkelabhängigen Mengenverteilung (22) des Streuguts (S) und der erfassten winkelabhängigen Geschwindigkeitsverteilung (24) des Streuguts (S) ein Vergleichen des mengenbasierten Abwurfwinkels und des geschwindigkeitsbasierten Abwurfwinkels umfasst.

4. Verfahren nach einem der vorstehenden Ansprüche,
**dadurch gekennzeichnet, dass** das Erfassen der winkelabhängigen Mengenverteilung (22) des Streuguts (S) und das Erfassen der winkelabhängigen Geschwindigkeitsverteilung (24) des Streuguts (S) mittels des gleichen oder desselben Sensors (12a-12g) oder der gleichen oder derselben Sensoren (12a-12g) erfolgt.

5. Verfahren nach einem der vorstehenden Ansprüche,
**dadurch gekennzeichnet, dass** das Erfassen der winkelabhängigen Mengenverteilung (22) des Streuguts (S) und/oder das Erfassen der winkelabhängigen Geschwindigkeitsverteilung (24) des Streuguts (S) mittels eines oder mehrerer Sensoren (12a-12g) des Messsystems (10) erfolgt, welche im Nahbereich der Streuscheibe (20) der landwirtschaftlichen Streumaschine angeordnet sind.

6. Verfahren nach einem der vorstehenden Ansprüche,
**dadurch gekennzeichnet, dass** das Erfassen der winkelabhängigen Mengenverteilung (22) des Streuguts (S) auf Grundlage einer winkelabhängigen Amplitudenverteilung (14) der Messsignale des Messsystems (10) erfolgt.

7. Verfahren nach einem der vorstehenden Ansprüche,
**dadurch gekennzeichnet, dass** das Erfassen der winkelabhängigen Geschwindigkeitsverteilung (24) des Streuguts (S) auf Grundlage von winkelabhängigen Frequenzänderungen (16) zwischen gesendeten und reflektierten Signalen des Messsystems (10) erfolgt.

8. Verfahren nach einem der Ansprüche 2 bis 7,
**dadurch gekennzeichnet, dass** beim Ermitteln des geschwindigkeitsbasierten Abwurfwinkels aus der erfassten winkelabhängigen Geschwindigkeitsverteilung (24) des Streuguts (S)
- ein Zusammenhang zwischen der Geschwindigkeit des Streuguts (S) einerseits und einer Verweildauer des Streuguts (S) auf der Streuscheibe (20) andererseits; und/oder
- ein Zusammenhang zwischen der Verweildauer des Streuguts (S) auf der Streuscheibe (20), eines eingestellten Aufgabepunkts des Streuguts (S) auf die Streuscheibe (20) und einer Drehzahl der Streuscheibe (20) einerseits und dem Abwurfwinkel andererseits
berücksichtigt wird.

9. Verfahren nach einem der vorstehenden Ansprüche,
**gekennzeichnet durch** zumindest einen der folgenden Schritte:
- Ausgeben einer Warnmeldung durch die landwirtschaftliche Streumaschine, wenn die Verifikation der Messwerte des Messsystems (10) scheitert und/oder die Abweichung zwischen dem mengenbasierten Abwurfwinkel und dem geschwindigkeitsbasierten Abwurfwinkel außerhalb eines Toleranzbereichs liegt;
- Unterbrechen oder Anpassen einer den mengenbasierten Abwurfwinkel und/oder den geschwindigkeitsbasierten Abwurfwinkel berücksichtigenden Regelung des Aufgabepunkts des Streuguts (S) auf die Streuscheibe (20), wenn die Verifikation der Messwerte des Messsystems (10) scheitert und/oder die Abweichung zwischen dem mengenbasierten Abwurfwinkel und dem geschwindigkeitsbasierten Abwurfwinkel außerhalb eines Toleranzbereichs liegt.

10. Landwirtschaftliche Streumaschine, mit
- zumindest einer rotierend antreibbaren Streuscheibe (20);
- einem Messsystem (10), welches dazu eingerichtet ist, eine winkelabhängige Mengenverteilung (22) von Streugut (S) nach dessen Abwurf von der Streuscheibe (20) zu erfassen; und
- einer Auswerteeinrichtung;
**dadurch gekennzeichnet, dass** das Messsystem (10) dazu eingerichtet ist, eine winkelabhängige Geschwindigkeitsverteilung (24) des Streuguts (S) nach dessen Abwurf von der Streuscheibe (20) zu erfassen,
wobei die Auswerteeinrichtung dazu eingerichtet ist, eine Verifikation der Messwerte des Messsystems (10) auf Grundlage der erfassten winkelabhängigen Mengenverteilung (22) des Streuguts (S) und der erfassten winkelabhängigen Geschwindigkeitsverteilung (24) des Streuguts (S) durchzuführen.

11. Landwirtschaftliche Streumaschine nach Anspruch 10,
**dadurch gekennzeichnet, dass** die Auswerteeinrichtung dazu eingerichtet ist, einen mengenbasierten Abwurfwinkel aus der erfassten winkelabhängigen Mengenverteilung (22) des Streuguts (S) und/oder einen geschwindigkeitsbasierten Abwurfwinkel aus der erfassten winkelabhängigen Geschwindigkeitsverteilung (24) des Streuguts (S) zu ermitteln

12. Landwirtschaftliche Streumaschine nach Anspruch 11,
**dadurch gekennzeichnet, dass** die Auswerteeinrichtung dazu eingerichtet ist, den mengenbasierten Abwurfwinkel und den geschwindigkeitsbasierten Abwurfwinkel im Rahmen der Verifikation der Messwerte des Messsystems (10) zu vergleichen.

13. Landwirtschaftliche Streumaschine nach einem der Ansprüche 10 bis 12, **dadurch gekennzeichnet, dass** das Messsystem (10) mehrere Sensoren (12a-12g), insbesondere Radarsensoren, aufweist, welche um die Streuscheibe (20) herum angeordnet sind, wobei die Sensoren (12a-12g) vorzugsweise im Nahbereich der Streuscheibe (20) angeordnet sind.

14. Landwirtschaftliche Streumaschine nach Anspruch 8 oder 9,
**dadurch gekennzeichnet, dass** die Streumaschine dazu eingerichtet ist, das Verfahren nach einem der Ansprüche 1 bis 9 auszuführen.

## Claims

1. Method for checking the operation of a measuring system (10) of an agricultural spreader, by means of which a current discharge angle can be determined during the application of granular material (S), having the step:
- detecting an angle-dependent quantity distribution (22) of the granular material (S) after its discharge by a spreading disk (20) of the agricultural spreader, by means of the measuring system (10) of the agricultural spreader;
**characterized by** the steps:
- detecting an angle-dependent velocity distribution (24) of the granular material (S) after its discharge by the spreading disk (20) of the agricultural spreader, by means of the measuring system (10) of the agricultural spreader; and
- performing a verification of the measured values of the measuring system (10) on the basis of the detected angle-dependent quantity distribution (22) of the granular material (S) and the detected angle-dependent velocity distribution (24) of the granular material (S).

2. Method according to claim 1,
**characterized by** at least one of the following steps:
- determining a quantity-based discharge angle from the detected angle-dependent quantity distribution (22) of the granular material (S); and
- determining a velocity-based discharge angle from the detected angle-dependent velocity distribution (24) of the granular material (S).

3. Method according to claim 2,
**characterized in that** performing the verification of the measured values of the measuring system (10) on the basis of the detected angle-dependent quantity distribution (22) of the granular material (S) and the detected angle-dependent velocity distribution (24) of the granular material (S) includes a comparison of the quantity-based discharge angle and the velocity-based discharge angle.

4. Method according to any one of the preceding claims,
**characterized in that** detecting the angle-dependent quantity distribution (22) of the granular material (S) and detecting the angle-dependent velocity distribution (24) of the granular material (S) is effected by means of the identical or same sensor (12a-12g) or the identical or same sensors (12a-12g).

5. Method according to any one of the preceding claims,
**characterized in that** the detection of the angle-dependent quantity distribution (22) of the granular material (S) and/or of the angle-dependent velocity distribution (24) of the granular material (S) takes place by means of one or more sensors (12a-12g) of the measuring system (10) which are arranged in the vicinity of the spreading disk (20) of the agricultural spreader.

6. Method according to any one of the preceding claims,
**characterized in that** the angle-dependent quantity distribution (22) of the granular material (S) is detected on the basis of an angle-dependent amplitude distribution (14) of the measurement signals of the measuring system (10).

7. Method according to any one of the preceding claims,
**characterized in that** the angle-dependent velocity distribution (24) of the granular material (S) is detected on the basis of angle-dependent frequency changes (16) between transmitted and reflected signals of the measuring system (10).

8. Method according to any one of claims 2 to 7,
**characterized in that,** in determining the velocity-based discharge angle from the detected angle-dependent velocity distribution (24) of the granular material (S),
- a correlation between the velocity of the granular material (S) on the one hand and a dwell time of the granular material (S) on the spreading disk (20) on the other hand; and/or
- a correlation between the dwell time of the granular material (S) on the spreading disk (20), a set feed point of the granular material (S) onto the spreading disk (20), and a velocity of the spreading disk (20) on the one hand and the discharge angle on the other hand
are taken into account.

9. Method according to any one of the preceding claims,
**characterized by** at least one of the following steps:
- outputting of a warning message by the agricultural spreader if the verification of the measured values of the measuring system (10) fails and/or the deviation between the quantity-based discharge angle and the velocity-based discharge angle is outside a tolerance range;
- interrupting or adjusting a regulation of the feed point of the granular material (S) onto the spreading disk (20), taking into account the quantity-based discharge angle and/or the velocity-based discharge angle, if the verification of the measured values of the measuring system (10) fails and/or the deviation between the quantity-based discharge angle and the velocity-based discharge angle is outside a tolerance range.

10. Agricultural spreader, having
- at least one rotationally drivable spreading disk (20);
- a measuring system (10) which is configured to detect an angle-dependent quantity distribution (22) of granular material (S) after its discharge from the spreading disk (20); and
- an evaluation device;
**characterized in that** the measuring system (10) is configured to detect an angle-dependent velocity distribution (24) of the granular material (S) after its discharge from the spreading disk (20),
wherein the evaluation device is configured to perform a verification of the measured values of the measuring system (10) on the basis of the detected angle-dependent quantity distribution (22) of the granular material (S) and the detected angle-dependent velocity distribution (24) of the granular material (S).

11. Agricultural spreader according to claim 10,
**characterized in that** the evaluation device is configured to determine a quantity-based discharge angle from the detected angle-dependent quantity distribution (22) of the granular material (S), and/or a velocity-based discharge angle from the detected angle-dependent velocity distribution (24) of the granular material (S)

12. Agricultural spreader according to claim 11,
**characterized in that** the evaluation device is configured to compare the quantity-based discharge angle and the velocity-based discharge angle within the scope of the verification of the measured values of the measuring system (10).

13. Agricultural spreader according to any one of claims 10 to 12,
**characterized in that** the measuring system (10) comprises a plurality of sensors (12a-12g), in particular radar sensors, which are arranged around the spreading disk (20), wherein the sensors (12a-12 g) are preferably arranged in the vicinity of the spreading disk (20).

14. Agricultural spreader according to claim 8 or 9,
**characterized in that** the spreader is configured to execute the method according to any one of claims 1 to 9.

## Revendications

1. Procédé de vérification du fonctionnement d'un système de mesure (10) d'une épandeuse agricole, au moyen duquel un angle de projection réel pendant l'épandage d'un produit d'épandage (S) peut être déterminé, comprenant l'étape de :
- capture d'une répartition de quantité (22) du produit d'épandage (S) dépendante de l'angle, après sa projection à partir d'un disque d'épandage (20) de l'épandeuse agricole au moyen du système de mesure (10) de l'épandeuse agricole ;
**caractérisé par** les étapes de :
- capture d'une répartition de vitesse (24) du produit d'épandage (S) dépendante de l'angle, après sa projection à partir d'un disque d'épandage (20) de l'épandeuse agricole au moyen du système de mesure (10) de l'épandeuse agricole ; et
- réalisation d'une vérification des valeurs de mesure du système de mesure (10) sur la base de la répartition de quantité (22) du produit d'épandage (S) dépendante de l'angle capturée et de la répartition de vitesse (24) du produit d'épandage (S) dépendante de l'angle capturée.

2. Procédé selon la revendication 1,
**caractérisé par** au moins une des étapes suivantes :
- détermination d'un angle de projection basé sur la quantité à partir de la répartition de quantité (22) du produit d'épandage (S) dépendante de l'angle capturée ; et
- détermination d'un angle de projection basé sur la vitesse à partir de la répartition de vitesse (24) du produit d'épandage (S) dépendante de l'angle capturée.

3. Procédé selon la revendication 2,
**caractérisé en ce que** la réalisation de la vérification de la valeur de mesure du système de mesure (10) sur la base de la répartition de quantité (22) du produit d'épandage (S) dépendante de l'angle capturée et de la répartition de vitesse (24) du produit d'épandage (S) dépendante de l'angle déterminée comprend une comparaison de l'angle de projection basé sur la quantité et de l'angle de projection basé sur la vitesse.

4. Procédé selon l'une quelconque des revendications précédentes,
**caractérisé en ce que** la capture de la répartition de quantité (22) du produit d'épandage (S) dépendante de l'angle et la capture de la répartition de vitesse (24) du produit d'épandage (S) dépendante de l'angle sont effectuées au moyen du même capteur ou d'un capteur identique (12a-12g) ou des mêmes capteurs ou de capteurs identiques (12a-12g).

5. Procédé selon l'une quelconque des revendications précédentes,
**caractérisé en ce que** la capture de la répartition de quantité (22) du produit d'épandage (S) dépendante de l'angle et/ou la capture de la répartition de vitesse (24) du produit d'épandage (S) dépendante de l'angle sont effectuées au moyen d'un ou de plusieurs capteurs (12a-12g) du système de mesure (10), qui sont disposés à proximité du disque d'épandage (20) de l'épandeuse agricole.

6. Procédé selon l'une quelconque des revendications précédentes,
**caractérisé en ce que** la capture de la répartition de quantité (22) du produit d'épandage (S) dépendante de l'angle est effectuée sur la base d'une répartition d'amplitude (14) dépendante de l'angle des signaux de mesure du système de mesure (10).

7. Procédé selon l'une quelconque des revendications précédentes,
**caractérisé en ce que** la capture de la répartition de vitesse (24) du produit d'épandage (S) dépendante de l'angle est effectuée sur la base de modifications de fréquence (16) dépendante de l'angle entre des signaux envoyés et réfléchis du système de mesure (10).

8. Procédé selon l'une quelconque des revendications 2 à 7,
**caractérisé en ce que** lors de la détermination de l'angle de projection basé sur la vitesse à partir de la répartition de vitesse (24) du produit d'épandage (S) dépendante de l'angle capturée
- une corrélation entre la vitesse du produit d'épandage (S) d'une part et une durée de séjour du produit d'épandage (S) sur le disque d'épandage (20) d'autre part ; et/ou
- une corrélation entre la durée de séjour du produit d'épandage (S) sur le disque d'épandage (20), un point de chute défini du produit d'épandage (S) sur le disque d'épandage (20) et une vitesse de rotation du disque d'épandage (20) d'une part et l'angle de projection d'autre part sont prises en compte.

9. Procédé selon l'une quelconque des revendications précédentes, **caractérisé par** au moins une des étapes suivantes :
- émission d'un avertissement par le biais de l'épandeuse agricole, lorsque la vérification des valeurs de mesure du système de mesure (10) échoue et/ou l'écart entre l'angle de projection basé sur la quantité et l'angle de projection basé sur la vitesse se trouve en dehors d'une plage de tolérance ;
- interruption ou adaptation d'une régulation du point de chute du produit d'épandage (S) sur le disque d'épandage (20) tenant compte de l'angle de projection basé sur la quantité et/ou de l'angle de projection basé sur la vitesse, lorsque la vérification des valeurs de mesure du système de mesure (10) échoue et/ou l'écart entre l'angle de projection basé sur la quantité et l'angle de projection basé sur la vitesse se trouve en dehors d'une plage de tolérance.

10. Épandeuse agricole, comprenant
- au moins un disque d'épandage (20) pouvant être entraîné en rotation ;
- un système de mesure (10), qui est conçu pour capturer une répartition de quantité (22) du produit d'épandage (S) dépendante de l'angle après sa projection à partir du disque d'épandage (20) ; et
- un dispositif d'évaluation ;
**caractérisée en ce que** le système de mesure (10) est conçu pour capturer une répartition de vitesse (24) du produit d'épandage (S) dépendante de l'angle après sa projection à partir du disque d'épandage (20),
dans laquelle le dispositif d'évaluation est conçu pour réaliser une vérification des valeurs de mesure du système de mesure (10) sur la base de la répartition de quantité (22) du produit d'épandage (S) dépendante de l'angle capturée et de la répartition de vitesse (24) du produit d'épandage (S) dépendante de l'angle capturée.

11. Épandeuse agricole selon la revendication 10,
**caractérisée en ce que** le dispositif d'évaluation est conçu pour déterminer un angle de projection basé sur la quantité à partir de la répartition de quantité (22) du produit d'épandage (S) dépendante de l'angle capturée et/ou un angle de projection basé sur la vitesse à partir de la répartition de vitesse (24) du produit d'épandage (S) dépendante de l'angle capturée

12. Épandeuse agricole selon la revendication 11,
**caractérisée en ce que** le dispositif d'évaluation est conçu pour comparer l'angle de projection basé sur la quantité et l'angle de projection basé sur la vitesse dans le cadre de la vérification des valeurs de mesure du système de mesure (10).

13. Épandeuse agricole selon l'une quelconque des revendications 10 à 12,
**caractérisée en ce que** le système de mesure (10) présente plusieurs capteurs (12a-12g), en particulier des capteurs radars, qui sont disposés autour du disque d'épandage (20), dans laquelle les capteurs (12a-12g) sont de préférence disposés à proximité du disque d'épandage (20).

14. Épandeuse agricole selon la revendication 8 ou 9,
**caractérisée en ce que** l'épandeuse est conçue pour exécuter le procédé selon l'une quelconque des revendications 1 à 9.
